# EUROPEAN PATENT APPLICATION

(11) **EP 1 460 857 A1**
(43) Date of publication of application: **22.09.2004**
(21) Application number: 03290657.0
(22) Date of filing: 17.03.2003
(51) Int. Cl.: H04N 13/00

(54) **Method and device for compensating ghost images in time sequential stereoscopic images**

(71) Applicant: DEUTSCHE THOMSON-BRANDT GMBH, 78048 Villingen-Schwenningen (DE)
(72) Inventor: Weitbruch, Sebastien, 78087 Monchweiler (DE); Thebault, Cedric, 78050 Villingen (DE); Etchebehere, Evelyne, 92160 Antony (FR)
(74) Representative: Ruellan-Lemonnier, Brigitte

(57) **Abstract**

The phosphor Lag effect shall be eliminated for a stereoscopic display. A corresponding method consists in calculating (51, 52) the ghost image due to the persistence of an image and withdrawing (31, 32) it from the next image to be displayed. It enables to remove the ghost image and permits the 3D effect to be rendered. However, the contrast of the image is all the more reduced, as the compensation is high. A compromise between the phosphor lag and the reduction of the contrast should consequently be found.

## Description

The present invention relates to a device for processing video data for displaying on display means with persistent luminous elements being drivable with a predetermined number of brightness values. Furthermore, the present invention relates to a corresponding method.

### Background

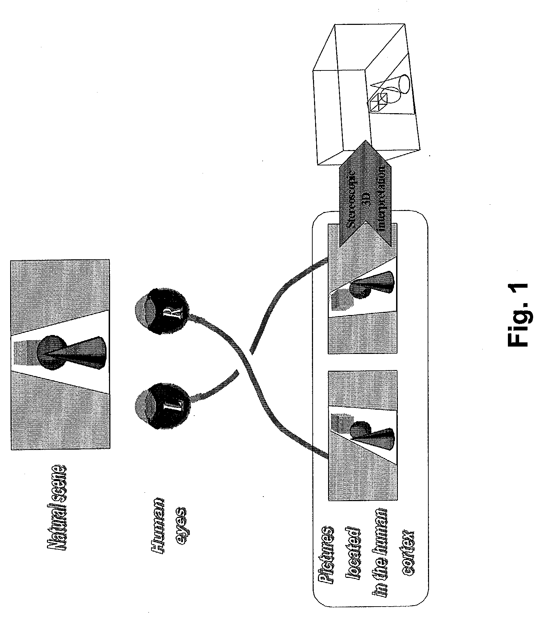

The 3D perception from the Human Visual System (HVS) is based on the close side-by-side positioning of the eyes as shown in Fig. 1. Each eye takes a view of the same area from a slightly different angle. These two separate images are sent to the brain for processing. When the two images arrive simultaneously in the back of the brain, they are united into one picture. The mind combines the two images by matching up the similarities and adding the small differences to catch finally a three-dimensional stereo picture. With stereovision, the HVS sees an object as solid in three spatial dimensions (width, height and depth) and it is the added perception of the depth dimension that makes stereovision so rich and special. Moreover, a stereo picture will increase the impression of sharpness in the brain.

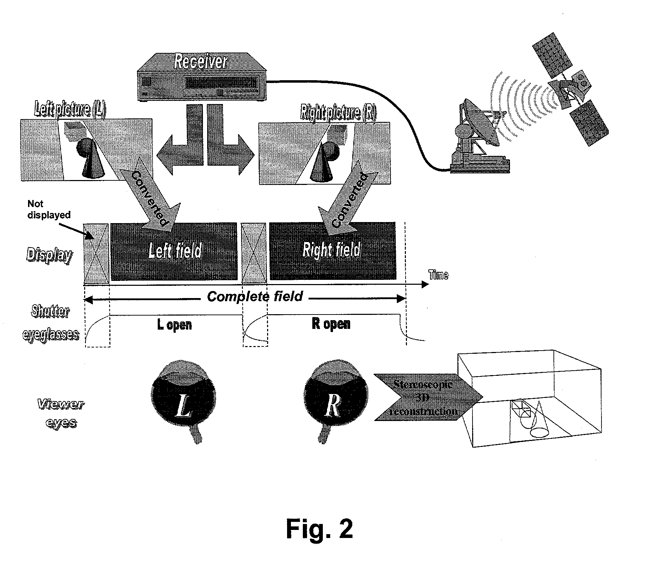

3D images are generated with the help of two video cameras positioned side-by-side in a similar way than the human eyes. Other methods mainly based on complex software are also able to generate artificial stereo pictures by ray tracing (simulation of light propagation). These images will be called left and right images. If right then left images are displayed sequentially from a source as shown in Fig. 2, and a synchronized shutter system in front of the eye allows the right image to only enter the right eye and conversely, then the stereovision can be observed. The shutter can be mounted in glasses which are matched with a display in which two constituent pictures are presented in alternation instead of simultaneously. The glasses occlude one eye and then the other in synchronism with the image displaying.

A simple method to implement a stereoscopic display is based on the separation of sub-fields into Left(L) and Right(R) groups which are synchronized with the open and close stage of the LCD shutter glasses. An advantage of such a method is the compatibility of the Plasma between 2D and 3D modes. This compatibility is ensured through a simple change of the sub-field encoding.

This method is often called "field sequential". This method avoids the retinal rivalry caused by anaglyph viewing (another method based on a two-color glasses associated with a two-color picture - each color related to one eye and resulting in a monochrome stereoscopic vision, very old method traced back to 1858). Nevertheless, this method can introduce other discomfort such as the introduction of time parallax between the two images, or the possibility of "ghosting" between the images due to phosphor persistence. Most glasses-shutter systems use LCDs which work with polarized light. Currently, glasses using LCDs can provide good switching speed and reasonable extinction of the alternative lenses. The electro-optical polarizing shutters available on the market today transmit only 30% of the unpolarized input light (rather than 50% for perfect polarizers) and this reduces the image brightness tremendously. Some eyeglass shutters are connected by wires to the monitor, others are controlled by infrared and are wireless.

The display of stereo pictures on a Plasma screen needs also the possibility to display two different pictures per frame which is a new challenge for this technology.

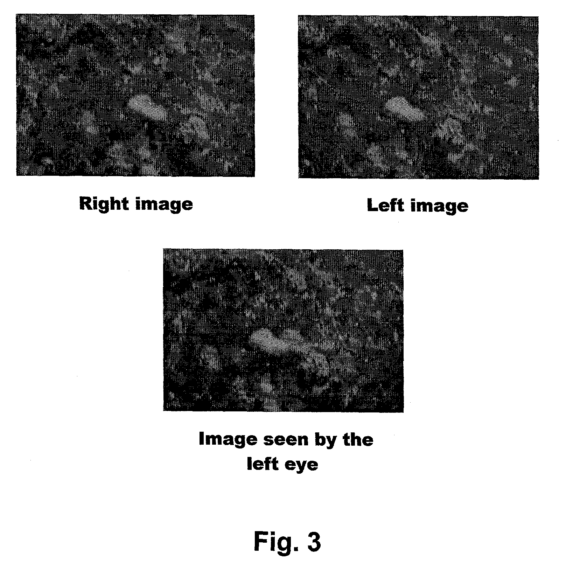

The main problem encountered with such a solution is the problem of Phosphor Lag. Actually, the green and red phosphors take too much time to switch off, and so the right image lags on the left one and vice versa, which does not enable the 3D effect as shown in Figure 3.

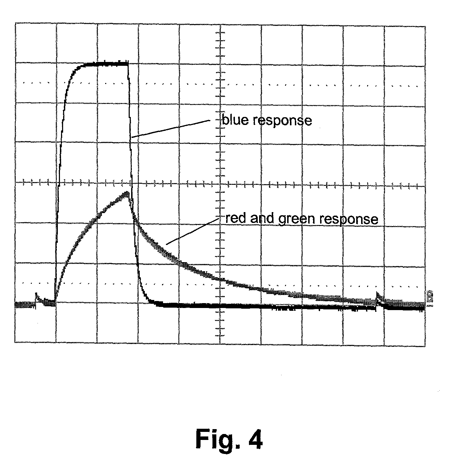

Figure 4 shows the response of each phosphor element to the same excitation. The response time of green and red phosphor is longer than that of blue phosphor.

The assumption shall be made that the display of an image begins with the left image. An image, which is seen by the right eye (respectively left eye), will be called a right image (respectively left image).

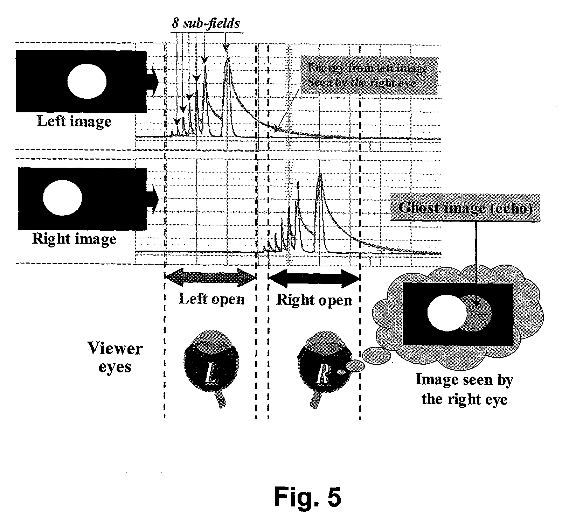

As a result of the slowness of the red and green phosphors, the phosphors activated for the left image are still lighting while the right image has to be displayed. Consequently, there will be a ghost image on the right image due to the left image and on a following left image the ghost image due to the right image can be seen. This is illustrated by Figure 5, which shows how subfields behave in such a configuration.

However, the stereoscopic system as described above requires the left sub-fields to be seen only by the left eye, and the right sub-fields to be seen only by the right eye. But, as far as the green and right phosphors lag when shutting down, the right eye will receive some part of luminance of the left image and conversely. The Phosphor Lag is strong enough to prevent the stereoscopic effect since the right eye receives both right and left information.

### Invention

In view of that it is the object of the present invention to present a device and method for enabling a stereoscopic vision on display screens with persistent phosphor elements.

According to the present invention this object is solved by a method for processing video data for display on display means with persistent luminous elements being drivable with a first number of brightness values including the steps of providing a first video signal with a first number of brightness values, rescaling said first video signal to a second number of brightness values being smaller than the first number of brightness values, adding an offset brightness value to the rescaled video signal in order to obtain a shifted signal, calculating a ghost video signal on the basis of a second video signal preceding said first video signal and subtracting said ghost video signal from said shifted signal.

Furthermore, the above object is solved by a device for processing video data for display on display means with persistent luminous elements being drivable with a first number of brightness values including calculating means for rescaling a first video signal with a first number of brightness values to a second number of brightness values being smaller than the first number of brightness values, for adding an offset brightness value to the rescaled video signal in order to obtain a shifted signal, for calculating a ghost video signal on the basis of a second video signal preceding said first video signal and for subtracting said ghost video signal from said shifted signal.

The present invention is based on the idea of increasing the value of the black level in order to hide ghost images in this higher black. Then the ghost image due to the persistence of an image will be calculated and withdrawn from the next image to be displayed. Thus, the ghost image is removed and the 3D-effect to be rendered is permitted.

Advantageously, the inventive method is applied to plasma display devices having a flat and large screen and showing no relevant viewing angle constraints. For these reasons, plasma display panels (PDP) are really suitable for use in stereoscopic vision. Such display does not cause a geometric distortion in the displayed image and therefore enables a precise depth expression of stereoscopic images. In addition, the big size of such a display suits very well to a strong impression of volume. A further advantage is the easy implementation of the inventive method or device where extra costs do not come up in practice.

The amount of the offset brightness value may be set in dependence of the persistence of a luminous element. Preferably, it is set to be the maximum echo of a luminous element. This enables that every echo can be eliminated by subtracting it from the following image without going beyond the zero value.

However, if the maximum echo is used as offset brightness value the contrast of the image is reduced tremendously. Therefore, a compromise should be found so that the offset brightness value lays between 0 and the maximum echo. In fact it is not always necessary to use the maximum echo as offset brightness value because very slight ghost images are not felt as disturbing.

Preferably, for each of the green and red video signals of an image the offset is determined independently. With such offset values ghost images may be calculated by multiplying the second video signal by a factor representing the relation between a maximum echo and a maximum brightness of a regular image. Thus, such factor for the green and red signals has to be determined only once and ghost images can be calculated on the basis of these factors for each video signal.

The offset should be composed of a red, a green and a blue signal component. Otherwise, the background of an image would be colorized disturbingly.

### Drawings

Exemplary embodiments of the invention are illustrated in the drawings and are explained in more detail in the following description. The drawings showing in:
- Fig. 1: a diagram of the principle of stereoscopic vision;
- Fig. 2: a diagram of the principle of the stereoscopic displaying;
- Fig. 3: the phosphor lag effect as visible on real stereo-scopic images;
- Fig. 4: the time response of different phosphor elements;
- Fig. 5: the effect of the phosphor lag when displaying stereoscopic pictures;
- Fig. 6: a block diagram of the inventive method for compensating the phosphor lag effect;
- Fig. 7: right and left pictures without compensation;
- Fig. 8: a right picture with higher green and red black levels;
- Fig. 9: a right picture with a higher black level;
- Fig. 10: a right picture with an intermediate black level; and
- Fig. 11: a block diagram of a circuit implementation of a 3D-plasma display device.

### Exemplary embodiments

As explained above in connection with Figure 5, red and green phosphors of the left image are still lighting as the right image has to be displayed. The idea of the present invention consists in taking into account that these phosphors are still lighting and in reducing accordingly the encoded level to be displayed in the right image, corresponding to these phosphors.

One can assume that there is a certain percentage α (respectively β) of green (respectively red) of the left image, which is transmitted on the right image; this percentage will be withdrawn from the following right image and conversely.

However, if the level to be displayed in the left image is 0, it will not be possible to do the subtraction. So the level of the black has to be increased to a level λ.
One can choose either to use different black levels for the three components, in this case one will have a greenish black, or to use a same value for the black level, in this case the black level will be brighter but uncolored (gray in fact) .

Ideally in order to have no ghost image, the ghost image should be hidden in the black, so λ should be equal to the maximum level of the ghost image, which is (α*255)/100 (since generally α > β). But this value can be too high (the contrast depends directly on this black level, so in this case one will have a bad contrast), and so a compromise has to be found between the contrast and the visibility of the ghost image. In any case λ will have a value between 0 (good contrast but a full ghost image) and (α*255)/100 (poor contrast but no ghost image).

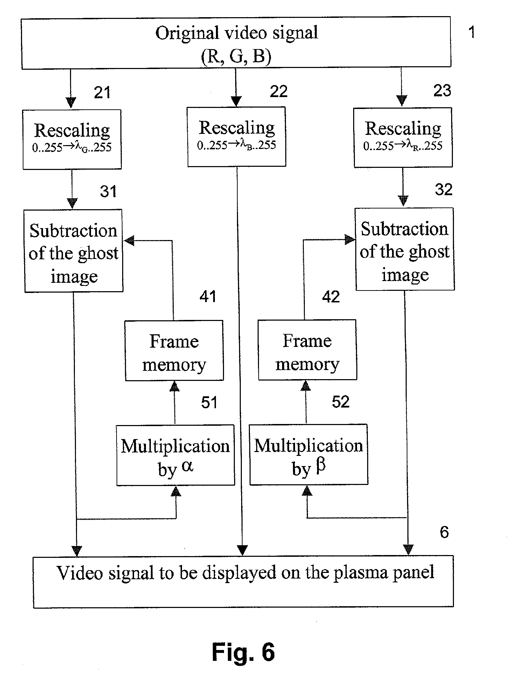

The image represented by video signal 1 in Fig. 6 has to be rescaled according to the new value of the black level. The rescaling blocks 21, 22, 23 increase the level of the black and rescale the picture accordingly.

After the rescaling of the red signal in block 21 the ghost image which is expected is subtracted in block 31 from the green video signal. The ghost image is obtained by calculating it on the basis of the perceiving image. Therefore, the image is multiplied by factor α in block 51, wherein α represents the maximum green echo of an image. The factor α has been obtained on the basis of measurements in advance.

After the calculation of the ghost image by multiplication, the ghost image is stored in a frame memory 41 so that it can be read out for the next field or image. After the subtraction of the ghost image the final video signal 6 to be displayed on a plasma panel is obtained.

The same procedure is performed for the red video signal in the rescaling block 23, the subtraction block 32, the frame memory 42 and the multiplication block 52. The specific multiplication factor for the red signal is β to obtain the red ghost image.

Although there is no blue ghost image the blue original video signal is also rescaled so that the image is not colorized after resealing. Thus, the signal from the rescaling block 22 for the blue video signal is directly used for the video signal 6 to be displayed on the display panel.

The right and the left images are sent successively and alternately into the ghost image compensation means shown in Figure 6. So the frame memory 41, 42 contains the right image when handling the left image and conversely.

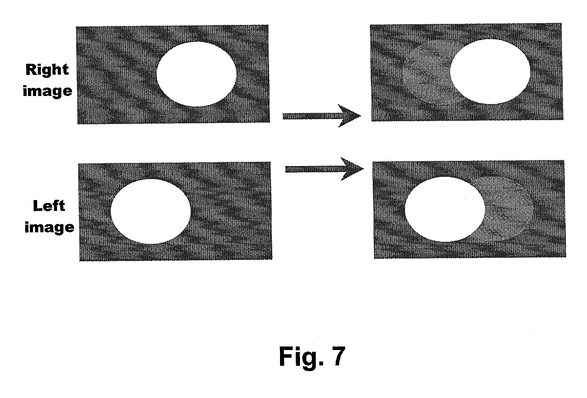

As a result, there is a reduction of the contrast, depending on the value chosen for the compensation. As a too weak contrast also prevents from rendering a good 3D effect, a compromise has to be found between the phosphor lag and the loss of contrast resulting from the compensation. Figures 7 to 10 are used to explain such compromise.

Figure 7 shows on the left side the right image and the left image to be displayed, each consisting of a black background and a white circle. When displaying on a phosphor screen the white circle of the left image produces a green ghost image on the right image. Similarly, the right image produces a green ghost image on the left image.

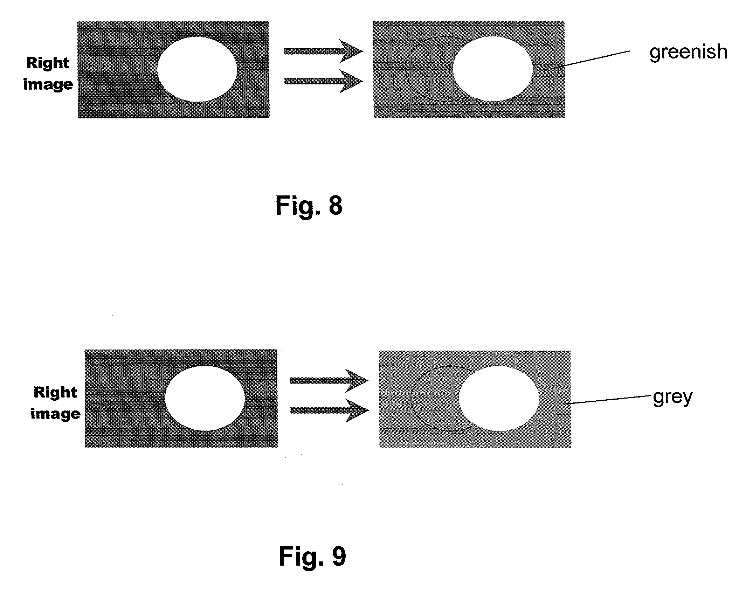

If the right picture according to Figure 8 would be raised to a higher green and red black levels equal to those levels of the ghost pictures of Figure 7, the ghost picture of the left image would no longer be perceptible since it can be subtracted from the higher background. However, this background is no longer black but greenish. This change in colour might be very disturbing for the viewer. Therefore, the level of the blue black level and the level of the red black level might also be raised to higher values according to Figure 9. Thus, the background of the right image would be grey. Also in this case the ghost picture of the left image would be subtracted from the right image so that it would not be visible. The disadvantage, however, of such a raising to a higher grey level is the loss of contrast.

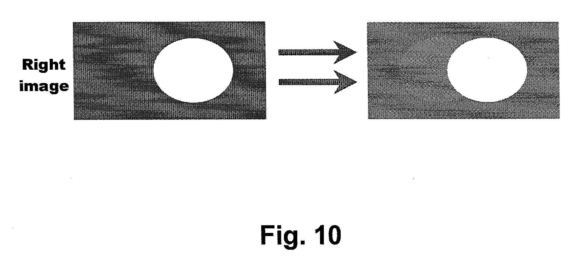

Experiments show that ghost pictures with very low levels do not disturb the 3D-impression of a viewer. Therefore, a compromise between a complete compensation of a ghost picture and high contrast can be found. Such compromise is depicted in Figure 10. The rescaling leads to a dark grey background and a light greenish ghost picture caused by the left image can be seen on the right image. However, such discrete ghost picture does not disturb a 3D-impression of a stereoscopic picture.

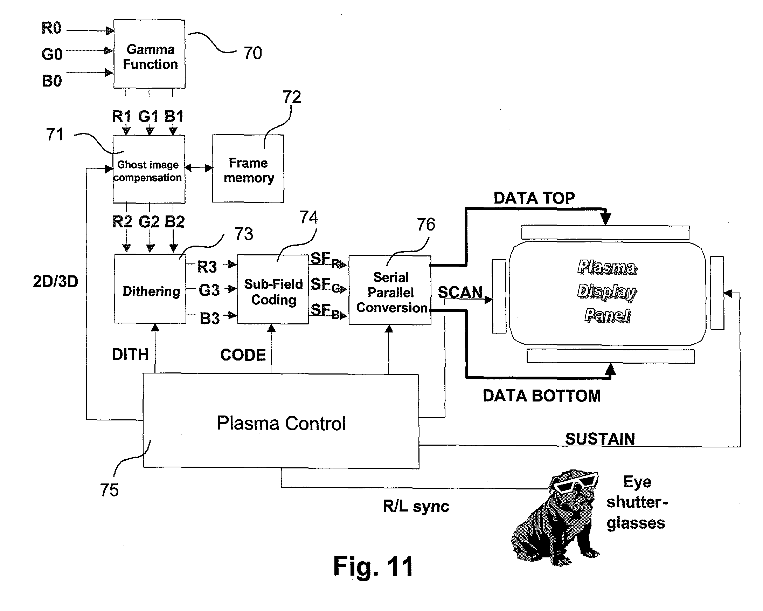

Figure 11 illustrates a possible implementation of the algorithm for ghost image compensation. RGB input pictures indicated by the signals R0, G0 and B0 are forwarded to a gamma function block 70. It can consist of a look up table (LUT) or it can be formed by a mathematical function. The outputs R₁, G₁ and B₁ of the gamma function block 70 are forwarded to a ghost image compensation block 71 which may be structured according to Figure 6. Calculated ghost images of preceding images are stored in frame memory 72. For compensation a stored ghost image is read out from frame memory 72 by the ghost image compensation block 71. The compensated signals are indicated by R2, G2 and B2.

These compensated signals R2, G2 and B2 are provided for a dithering block 73 in order to perform a well-known dithering procedure.

The video signals R2, G2 and B2 subjected to the dithering in the dithering block 73 are output as signals R3, G3, B3 and are forwarded to a sub-field coding unit 74 which performs sub-field coding under the control of the control unit 75. The plasma control unit 75 provides the code for the sub-field coding unit 74. Furthermore, the plasma control unit 75 provides a controlling signal DITH for the dithering unit 73 and also a controlling signal 2D/3D for the ghost image compensation unit 71 which can be switched off for 2D-display.

As to the sub-field coding it is expressively referred to the European patent application EP-A-1 136 974.

The sub-field signals for each color output from the sub-field coding unit 74 are indicated by reference signs SF_{R}, SF_{G}, SF_{B}. For plasma display panel addressing, these sub-field code words for one line are all collected in order to create a single very long code word which can be used for the linewise PDP addressing as indicated in Figure 11 by the signals DATA TOP and DATA BOTTOM. This is carried out in a serial to parallel conversion unit 76 which is itself controlled by the plasma control unit 75.

Furthermore, the control unit 75 generates all scan and sustain pulses for PDP control. It receives horizontal and vertical synchronizing signals for reference timing. Moreover, the plasma control unit 75 provides a R/L sync signal for controlling eye shutter-glasses.

The present invention is applicable to all displays useable for stereoscopy suffering from Phosphor decade time (i.e.: PDP, LCD, LCOS etc. ...) .

The present invention has been described in relation with red and green phosphor lag. However, it is obvious that the three phosphors can suffer from phosphor lag. So, the same kind of compensation may be applied to a blue ghost image.

## Claims

1. Method for processing video data for display on display means with persistent luminous elements being drivable with a first number of brightness values
**characterized by**
providing a first video signal (1) with a first number of brightness values,
rescaling (21, 22, 23) said first video signal (1) to a second number of brightness values being smaller than the first number of brightness values,
adding an offset brightness value to the rescaled video signal in order to obtain a shifted signal,
calculating (51, 52) a ghost video signal on the basis of a second video signal preceding said first video signal (1) and
subtracting (31, 32) said ghost video signal from said shifted signal.

2. Method according to claim 1, wherein the amount of said offset brightness value depends on the persistence of a luminous element.

3. Method according to claim 2, wherein said offset brightness value corresponds to a maximum echo of a luminous element.

4. Method according to claim 2, wherein said offset brightness value is set between 0 and a maximum echo.

5. Method according to one of the claims 1 to 4, wherein said offset brightness value is independently determined for green and red video signals.

6. Method according to one of the claims 1 to 5, wherein the calculation (51, 52) of the ghost video signal is performed by multiplying the second video signal by a factor representing the relation between a maximum echo and a maximum brightness of a regular image.

7. Method according to one of the claims 1 to 6, wherein said offset brightness value is composed of a red, a green and a blue signal component.

8. Device for processing video data for display on display means with persistent luminous elements being drivable with a first number of brightness values
**characterized by**
calculating means (71) for rescaling (21, 22, 23) a first video signal with a first number of brightness values to a second number of brightness values being smaller than the first number of brightness values, for adding an offset brightness value to the rescaled video signal in order to obtain a shifted signal, for calculating (51, 52) a ghost video signal on the basis of a second video signal preceding said first video signal and for subtracting (31, 32) said ghost video signal from said shifted signal.

9. Device according to claim 8, wherein the amount of said offset brightness value depends on the persistence of a luminous element.

10. Device according to claim 9, wherein said offset brightness value corresponds to a maximum echo of a luminous element.

11. Device according to claim 9, wherein said offset brightness value is set between 0 and a maximum echo.

12. Device according to one of the claims 8 to 11, wherein one offset brightness value is independently determined for each of a green and a red video signal.

13. Device according to one of the claims 8 to 12, wherein a ghost image is calculable by said calculating means (71) by multiplying said second video signal by a factor representing the relation between a maximum echo and a maximum brightness.
